# EUROPÄISCHE PATENTANMELDUNG

(11) **EP 2 985 513 A1**
(43) Veröffentlichungstag der Anmeldung: **17.02.2016**
(21) Anmeldenummer: 15182435.6
(22) Anmeldetag: 18.01.2006
(51) Int. Cl.: F21S 8/00, F03D 80/10, F21Y 115/10

(54) **STABLEUCHTE ZUR BEFEUERUNG EINES TURMES**

(30) Priorität: 19.01.2005 DE 102005002650
(62) Teilanmeldung aus: 06701141.1
(71) Anmelder: Wobben Properties GmbH, 26607 Aurich (DE)
(72) Erfinder: Wobben, Aloys, 26607 Aurich Deutschland (DE)
(74) Vertreter: Eisenführ Speiser

(57) **Zusammenfassung**

Eine Stableuchte (10) zur Befeuerung eines Turmes oder eines Turmelementes, insbesondere einer Windenergieanlage, ist als stabförmiger Halter ausgebildet, an dessen erstem Ende Leuchtmittel (14) und an dessen zweitem Ende Leuchtmittelanschlüsse (15) angeordnet sind. Um einen Turm, insbesondere einer bereits errichteten Windenergieanlage, beziehungsweise ein Turmelement für eine noch zu errichtende Windenergieanlage mit einer Befeuerung auszustatten, wird die Stableuchte (10) von innen durch eine Bohrung in der Turmwand (11) gesteckt, so dass die Leuchtmittel (14) in die Umgebung (9) des Turmes abstrahlen.

## Beschreibung

Die Erfindung betrifft eine Stableuchte zur Befeuerung eines Turmes, insbesondere einer Windenergieanlage, mit einem stabförmigen Halter, an dessen erstem Ende Leuchtmittel und an dessen zweitem Ende Leuchtmittelanschlüsse angeordnet sind. Weiterhin bezieht sie sich auf eine Windenergieanlage, dessen Turm oder Turmelement durch mindestens zwei in Bohrungen in einer Turmwand angeordneten Stableuchten gekennzeichnet ist. Die Erfindung betrifft ferner ein Verfahren zur Anbringung einer Befeuerung eines Turmes, insbesondere einer Windkraftanlage.

Die Türme von derzeit üblichen Windenergieanlagen besitzen keine kennzeichnende Nachtbefeuerung. Für eine Absicherung des Flugverkehres in der Nähe der häufig recht weitläufig ausgedehnten Windparks, bestehend aus mehreren einzelnen Windenergieanlagen, ist eine fehlende Nachtkennzeichnung jedoch durchaus von Nachteil, da solche Gebiete weiträumig gemieden werden müssen und insbesondere für den Freizeitflugverkehr ein Hindernis darstellen.

DE 103 58 962 A1 offenbart eine Windenergieanlage mit einem Turm, der mindestens ein nach außen abstrahlendes Hindernisfeuer aufweist, wozu im Turm mindestens ein Durchbruch vorgesehen ist, durch den eine Versorgungsleitung aus dem Inneren des Turms nach außen verlegt ist. Als Versorgungsleitung kann anstelle elektrischer Leitungen beispielsweise ein Lichtquellenleiter durch den Durchbruch geführt werden, um dann mittels Prisma oder Linsensystem eine gewünschte Abstrahlcharakteristik zu erreichen.

Die Aufgabe der Erfindung besteht darin, eine möglichst einfache und kostengünstige technische Lösung bereitzustellen, um einen Turm, insbesondere einer bereits errichteten Windenergieanlage, beziehungsweise ein Turmelement für eine noch zu errichtende Windenergieanlage mit einer Befeuerung auszustatten.

Diese Aufgabe wird bei einer Vorrichtung der eingangs genannten Art erfindungsgemäß dadurch gelöst, dass die Stableuchte von innen durch eine Bohrung in der Turmwand steckbar ist, so dass die Leuchtmittel in die Umgebung des Turmes abstrahlen. Damit kann auf sehr einfache und kostengünstige Art und Weise ein Turm einer bereits errichteten Windenergieanlage mit einer den Flugverkehr sichernden Befeuerung in verschiedenen Höhen des Turmes nachgerüstet beziehungsweise ein Turmelement einer noch zu errichtenden Windenergieanlage mit einer solchen Befeuerung vorgerüstet werden, so dass im errichteten Zustand des Turmes nur noch die Leuchtmittelanschlüsse kontaktiert werden müssen.

Die erfindungsgemäße Stableuchte besitzt an ihrem ersten Ende Leuchtmittel und an ihrem zweiten Ende Leuchtmittelanschlüsse. Die Leuchtmittel sind vorzugsweise Leuchtdioden, da diese heutzutage relativ preisgünstig und mit großen Lichtstärken erhältlich sind. Leuchtdioden besitzen eine lange Lebensdauer, sodass der Aufwand für Wartungsarbeiten an und Austausch von Stableuchten möglichst gering gehalten wird. Weiterhin sind Leuchtdioden sehr klein, so dass eine Stableuchte trotz Bestückung mit mehreren Leuchtmitteln dieser Art einen kleinen Durchmesser besitzt. Die Stableuchte soll an dem durch die Turmwand steckbaren ersten Ende einen möglichst geringen Durchmesser besitzen, da aufgrund der Statik des Turmes große Bohrungen in der Turmwand zu vermeiden sind.

Die Leuchtmittelanschlüsse sind mittels eines Steckers an im Inneren des Turmes liegende Versorgungsleitungen angeschlossen. Diese Leitungen sind mit einem zentralen Steuerschrank verbunden, der die Ansteuerung, vorzugsweise als Konstant-Strom-Ansteuerung, der Stableuchte übernimmt. Diese Ausführungsform ist besonders vorteilhaft, da auf diese Weise keine Elektronik innerhalb der Stableuchte erforderlich ist. Eine solche Stableuchte ist besonders einfach und günstig zu fertigen. Der Betreiber der Windenenergieanlage kann daher eine defekte Stableuchte schnell, einfach und kostengünstig gegen eine neue austauschen.

Die Leuchtmittel sind vorzugsweise mit einer Signalvorrichtung ausgestattet, um den Ausfall eines Leuchtmittels oder der Leuchtmittel dem Betreiber des Turmes mitteilen und die Stableuchte möglichst schnell auswechseln zu können. Diese Signalvorrichtung kann beispielsweise aus einem Photowiderstand bestehen, der Aufschluss über die Funktion der Leuchtmittel gibt. Eine bevorzugte Ausführungsform ist eine extra Meldeleitung als Signalvorrichtung, zusätzlich zu den Versorgungsleitungen, die mittels der Leuchtmittelanschlüsse mit den Leuchtmitteln verbunden ist. Die Leuchtmittel sind dabei in Reihe geschaltet, so dass ein ausgefallenes Leuchtmittel den Stromfluss unterbricht und die Meldeleitung ein entsprechendes Signal an den zentralen Steuerschrank und somit an den Betreiber weiterleitet. Denkbar wäre ebenso eine Parallelschaltung der Leuchtmittel, was den Vorteil hätte, dass bei Ausfall eines Leuchtmittels die übrigen Leuchtmittel in ihrer Funktionsweise nicht beeinträchtigt werden.

Über den Leuchtmitteln ist bevorzugt eine Kappe als Schutzschicht angebracht, die die der Witterung ausgesetzten Leuchtmittel gegen Umwelteinflüsse, insbesondere Witterungseinflüsse, schützt. Dabei ist eine bevorzugte Ausführungsform dieser Kappe eine mit transparentem Material ausgegossene Schutzschicht. Eine über den Leuchtmitteln befindliche Kuppel, vorzugsweise aus Glas, wird, vorzugsweise mit transparentem optischem Harz, ausgegossen, was zum einen die Leuchtmittel schützt und gegen die Umwelt abdichtet, zum anderen jedoch auch als Fixierung der Leuchtmittel innerhalb dieser Kuppel dient.

Über dieser Schutzschicht ist vorzugsweise ein Bügel, vorzugsweise aus Metall gefertigt, angeordnet, um einen Schutz der Leuchtmittel und der Schutzhülle gegen mechanische Einflüsse zu gewährleisten, wie zum Beispiel bei Kranarbeiten an der Gondel oder am Turm.

Die Bohrung in der Turmwand, durch die die erfindungsgemäße Stableuchte steckbar ist, ist vorzugsweise horizontal, also parallel zum Erdboden, ausgerichtet, um eine ebenfalls horizontale Ausrichtung der Leuchtmittel zu gewährleisten. In einer bevorzugten Ausführungsform ist in einer horizontalen Bohrung in der Turmwand eine Hülse angeordnet, die als Führung für die in die Turmwand steckbare Stableuchte dient. Die Stableuchte ist das passgenaue Gegenstück zu der Hülse, die die optimale Positionierung der Stableuchte derart vorgibt, dass die Stableuchte sowohl in der Querachse horizontal ausgerichtet ist als auch die in ihr vorzugsweise in einer Linie angeordneten Leuchtmittel horizontal angeordnet sind.

Ferner ist an der Hülse oder an dem Schutzbügel eine Vorrichtung angeordnet, welche die optimale Position der Stableuchte angibt, bei der die Stableuchte so weit aus dem Turm hinausragt, dass sie in einen möglichst großen Raumwinkel abstrahlt. An der Innenseite der Turmwand ist dabei eine Auflage angeordnet, die eine optimale Justage des Hülse beziehungsweise der Stableuchte ermöglicht.

Die Leuchtmittel sind ferner vorzugsweise in einer Linie angeordnet, um eine möglichst gute Ausleuchtung in horizontaler Richtung zu gewährleisten. In einer solchen Ausführungsform ist ein Turm, vorzugsweise einer Windenergieanlage, beziehungsweise ein Turmelement mit mindestens zwei in einer Turmebene an ihm angeordneten Stableuchten so ausgestaltet, dass er in einem Raumwinkel von 360° befeuerbar ist.

Die Anbringung einer Befeuerung eines Turmes, insbesondere einer Windenergieanlage, erfolgt erfindungsgemäß derart, dass das erste Ende einer Stableuchte von innen durch eine in der Turmwand vorgesehene Bohrung in eine von außen sichtbare Position gebracht wird und die Leuchtmittelanschlüsse des zweiten Endes der Stableuchte mit im Inneren des Turmes angeordneten Versorgungsleitungen verbunden werden. Dies ermöglicht eine einfache und kostengünstige Nachrüstung eines bereits errichteten Turmes. Dazu sind lediglich Arbeiten erforderlich, die von einer im Inneren des Turms angeordneten Plattform aus durchgeführt werden können, so dass keine aufwendigen Kranarbeiten an der Außenwand des Turmes erforderlich sind. Ein für die Stableuchte vorgesehenes Loch wird in die Turmwand gebohrt, vorzugsweise mit einem Durchmesser von nur wenigen Zentimetern, um die Statik des Turmes nicht zu beeinträchtigen. Die Stableuchte besitzt am ersten Ende einen geringen Durchmesser, um passgenau in diese Bohrung steckbar zu sein. Der im Innern des Turmes verbleibende Teil dient der Ausrichtung der Stableuchte.

Basierend auf der erfindungsgemäßen Stableuchte betrifft die Erfindung eine Windenergieanlage beziehungsweise ein Turmelement, wobei mindestens zwei Stableuchten an einem Turm einer Windenergieanlage oder einem Turmelement derart angebracht sind, dass dieser Turm oder dieses Turmelement in alle für den Flugverkehr relevanten Richtungen sichtbar gekennzeichnet ist. Die Stableuchten ragen dabei so weit aus dem Turm heraus, dass beispielweise zwei Stableuchten in jeweils 180° oder drei Stableuchten in jeweils 120° oder analoge Ausführungsformen, bei denen mindestens zwei Stableuchten den kompletten Außenraum des Turmes befeuern, abstrahlen. Zu bevorzugen ist dabei eine Ausführungsform, bei der möglichst wenige Bohrungen in der Turmwand angebracht werden müssen, um einen möglichst großen Raumwinkel zu beleuchten.

Besonders vorteilhaft bei der erfindungsgemäßen Lösung ist die einfache und kostengünstige Nach- bzw. Aufrüstbarkeit eines Turmes beziehungsweise eines Turmelementes, insbesondere einer Windenergieanlage. Die Leuchtmittel sind preisgünstig erhältlich und von langer Lebensdauer, was die laufenden Kosten für die Wartung der bereits installierten Vorrichtung minimiert. Da die erfindungsgemäße Stableuchte eine einfache Struktur aufweist, lässt sie sich in großen Mengen zu relativ niedrigen Preisen herstellen. Die erfindungsgemäße Stableuchte ist besonders vorteilhaft, da bei Ausfall eines einzelnen Leuchtmittels schnell und einfach aus dem Inneren des Turmes heraus die komplette Leuchte ausgewechselt werden kann.

Weitere vorteilhafte Ausgestaltungen der Erfindung sind in weiteren Unteransprüchen angegeben.

Der Vorteil der erfindungsgemäßen Stableuchte besteht ferner darin, dass sowohl die einzelnen Turmelemente vor der Turmmontage mit der erfindungsgemäßen Stableuchte ausgerüstet als auch der bereits installierte Turm von innen mit dieser nachgerüstet werden kann.

Im Folgenden wird ein Ausführungsbeispiel der Erfindung anhand der Zeichnungen näher erläutert. Es zeigen:
- Fig. 1: eine perspektivische Ansicht eines mit in zwei Turmebenen angeordneten erfindungsgemäßen Stableuchten ausgestatteten Turms einer Windenergieanlage,
- Fig. 2: einen Schnitt durch die Querachse eines Turmes mit zwei installierten erfindungsgemäßen, nicht maßstabsgetreu dargestellten Stableuchten,
- Fig. 3: einen Querschnitt durch die Längsachse eines Turmes mit einer installierten erfindungsgemäßen Stableuchte,
- Fig. 4: einen Querschnitt durch die Längsachse einer erfindungsgemäßen Stableuchte,
- Fig. 5: einen Querschnitt durch die Turmwand sowie Draufsichten auf einen Rammschutz und eine Rohrklemme,
- Fig. 6: eine erfindungsgemäße Stableuchte in verschiedenen Ansichten,
- Fig. 7: einen Querschnitt durch eine Turmwand sowie Draufsichten auf den Rammschutz und die Rohrklemme mit eingebauter Stableuchte,
- Fig. 8: einen Querschnitt durch einen Turm mit Laufringen bzw. Gitterrosten und
- Fig. 9: Querschnitte durch eine Turmwand mit Laufringen bzw. Gitterrosten.

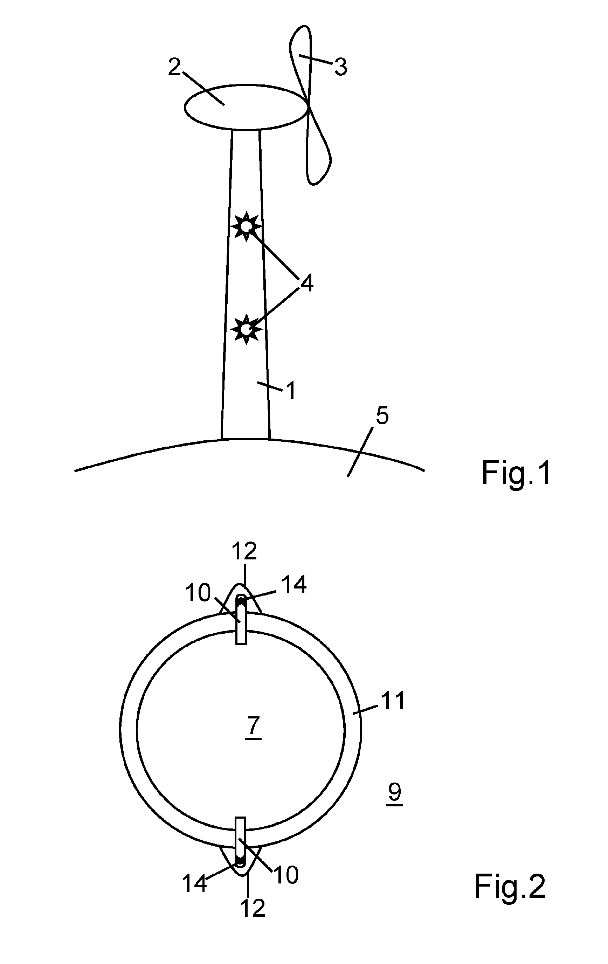

Fig. 1 zeigt einen Turm 1 einer Windenergieanlage, der auf einem Fundament 5 errichtet ist. An seinem oberen Ende sitzt die Maschinengondel 2 und die an dieser angeordneten Rotorblätter 3. An dem Turm sind in zwei Turmebenen Befeuerungen 4 angebracht, so dass der Turm von weitem für den Flugverkehr sichtbar ist.

In Fig. 2 ist ein Querschnitt durch den Turm 1 der Windenergieanlage gezeigt. In der Turmwand 11 sind zwei Stableuchten 10 angeordnet, die aus dem Innenraum 7 heraus durch Bohrungen in der Turmwand 11 gesteckt werden und in die Umgebung 9 des Turmes abstrahlen. Um die Leuchtmittel 14 der Stableuchte 10 gegen mechanische Umwelteinflüsse zu schützen, befindet sich über der Stableuchte 10 eine Schutzvorrichtung 12, die vorzugsweise gleichzeitig auch der korrekten Positionierung beim Einbau der Stableuchte 10 in die Turmwand 11 dienen kann.

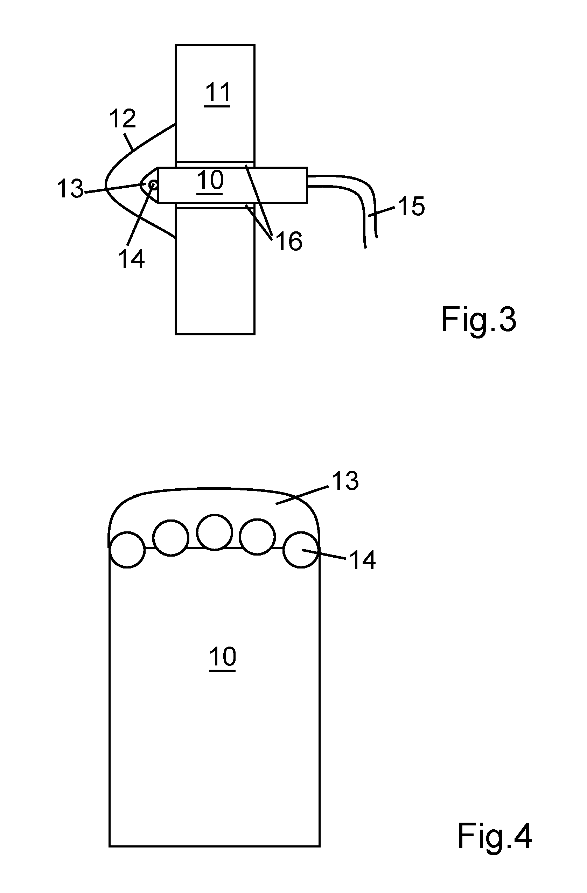

In Fig. 3 ist die Montage der erfindungsgemäßen Stableuchte 10 in der Turmwand 11 dargestellt. Die Stableuchte 10 sitzt passgenau in einer dafür vorgesehenen Bohrung in der Turmwand 11, wobei die passgenaue und horizontal optimierte Justage der Stableuchte 10 mittels einer in die Bohrung eingeführten Hülse (nicht gezeigt) und an der Stableuchte befestigen Führungsmitteln 16 erreicht wird. Das erste Ende der in die Umgebung 9 des Turmes leuchtenden Stableuchte 10 ragt soweit aus dem Turm heraus, dass die Leuchtmittel 14 von außen in einem möglichst großen Raumwinkel sichtbar sind. Über diesen Leuchtmitteln 14 ist eine Schutzschicht 13, beispielsweise ein optisches Harz angeordnet, um die Leuchtmittel 14 gegen Witterungseinflüsse zu schützen. Über diesem aus dem Turm herausragenden Teil der Stableuchte 10 ist ein Schutzbügel 12 angebracht, um die Stableuchte 10 mit den Leuchtmitteln 14 und der Schutzschicht 13 vor mechanischen Beschädigungen zu schützen. Am zweiten, in den Innenraum 7 des Turmes ragenden Ende der Stableuchte 10 sind die Leuchtmittelanschlüsse 15 angeordnet, die mit dafür vorgesehenen Versorgungsleitungen im Inneren 7 des Turmes zu kontaktieren sind.

Fig. 4 zeigt die mit einer Schutzschicht 13, beispielsweise optischem Harz, überzogenen Leuchtmittel 14 am ersten Ende der erfindungsgemäßen Stableuchte 10. In der gezeigten Ausführungsform sind als Leuchtmittel 14 fünf Leuchtdioden in einer Linie angeordnet, so dass sie in einer horizontalen Ebene in einen Raumwinkel von 180° abstrahlen.

Basierend auf der erfindungsgemäßen Stableuchte betrifft die Erfindung auch eine Ausführungsform, bei der in mehreren Ebene des Turmes Stableuchten zur Befeuerung des Turmes angeordnet sind. Ferner ist eine Befeuerung des Turmes von weniger als 360° in die Umgebung denkbar, wenn zum Beispiel eine solche aufgrund der Turmumgebung nicht erforderlich ist. Die Leuchtmittel der Stableuchte können abweichend von einer horizontalen Linie angeordnet sein. Der mechanische Schutzbügel kann vorzugsweise durch eine mechanische Schutzvorrichtung einer anderen Ausführung ersetzt sein, beispielsweise ein Gitter oder eine transparente Kuppel aus einem mechanisch robusten Material.

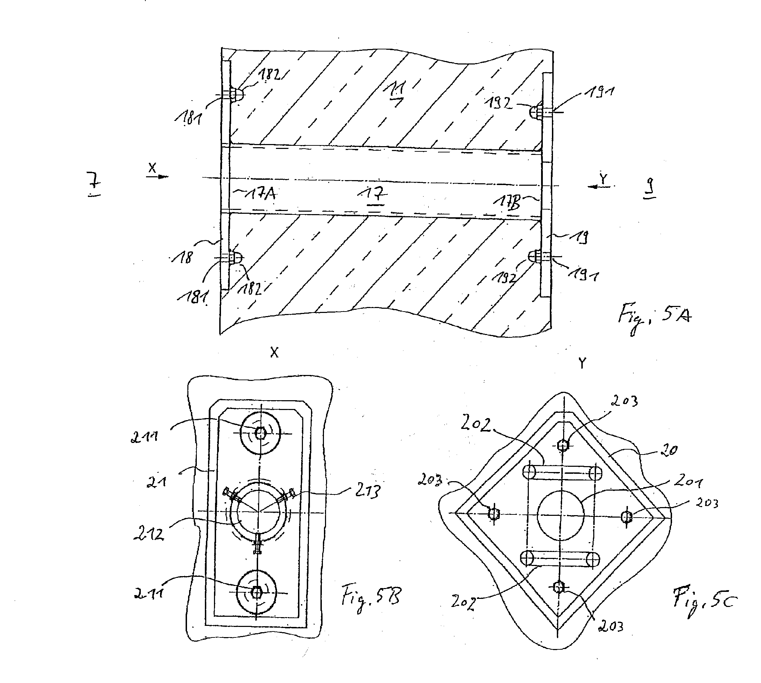

Nachfolgend wird eine Ausführungsform der Erfindung näher im Detail beschrieben. Fig. 5A zeigt einen Querschnitt durch die Turmwand 11 eines Betonsegmentes mit einer darin eingegossenen Hülse 17, an deren innerem Ende 17A und äußerem Ende 17B jeweils eine Platte 18 bzw. 19 angeschweißt ist. Diese Einheit wird bei der Herstellung des Betonfertigteiles mit eingegossen und ist dann an der vorgegebenen Position mit der erforderlichen Ausrichtung fest im Beton eingebunden. Jede der Platten 18, 19 weist Durchgangslöcher 181 bzw. 191 auf, hinter denen Muttern 182 bzw. 192 aufgeschweißt sind, so dass Schrauben durch diese Platten hindurch eingeschraubt werden können.

An der äußeren Platte 19 wird der sogenannte Rammschutz 20 angeschraubt, der in Fig. 5C in Draufsicht gezeigt ist. Dieser Rammschutz 20 ist vorzugsweise eine Platte mit einem zentralen Durchgangsloch 201 für die Stableuchte sowie oberhalb und unterhalb dieses Durchgangsloches 201 angeordneten Schutzbügeln 202, die den eigentlichen Rammschutz bilden. Weiterhin sind Löcher 203 vorgesehen, mit denen dieser Rammschutz 20 mit der äußeren Platte 19 verschraubt werden kann.

Die innere Platte 18 ist zur Befestigung der Stableuchte mittels der sogenannten Rohrklemme 21 vorbereitet, wie sie in einer Draufsicht in Fig. 5B gezeigt ist. In der Darstellung dieser Rohrklemme 21 sind zwei Schrauben 211 erkennbar, mit denen diese auf die innere Platte 18 aufgeschraubt werden kann. Im Zentrum der Rohrklemme 21 befindet sich wiederum eine Öffnung 212, durch welche die Stableuchte geführt werden kann und in welche diese in der gewünschten Position durch drei über den Umfang der Öffnung 212 gleichmäßig beabstandete Schrauben und Muttern 213 fixiert werden kann. Die Stableuchte kann daher in die Hülse 17 eingesetzt, in gewünschter Weise ausgerichtet und schließlich mittels dieser drei Schrauben 213 in der Position fixiert werden.

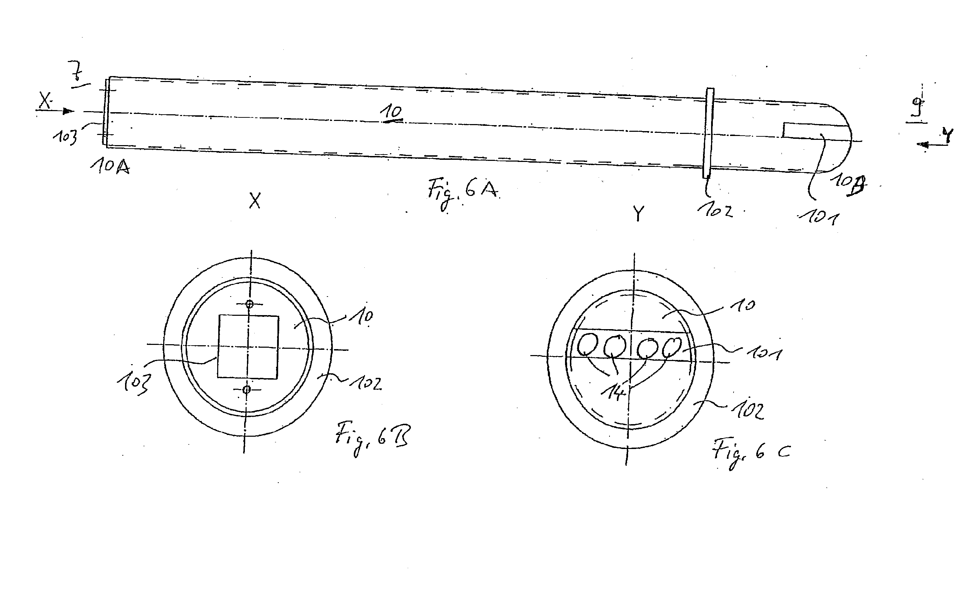

Fig. 6 zeigt die Stableuchte 10 selbst in einer Seitenansicht (Fig. 6A) sowie in einer Vorderansicht (Fig. 6B) und einer Rückansicht (Fig. 6C). Die Stableuchte 10 ist insgesamt aus Metall gefertigt. In ihrem äußeren Ende 16B ist eine Abstrahlöffnung 101 eingearbeitet, hinter der die Leuchtmittel 14 angeordnet sind, so dass sie in die Umgebung 9 abstrahlen können. Weiterhin weist die Stableuchte 10 einen umlaufenden Ring 102 (Anschlagring) auf, der exakt definiert, wie weit die Leuchte 10 in die Hülse 17 hineingeschoben werden kann. Damit ergibt sich zwangsläufig das Maß, um welches die Leuchte dann aus dem Turm herausragt. Weiterhin ist am in das Turminnere weisenden Ende 10A der Stableuchte 10 ein kleiner Absatz 103 erkennbar. Dieser Absatz ist beispielsweise als Vierkant ausgebildet, der in der Rückansicht der Fig. 6B gut erkennbar ist.

Sobald die Stableuchte 10 in die Hülse 17 eingesetzt ist, ist ihre horizontale Ausrichtung durch den Verlauf der Hülse 17 bereits erfolgt. Eine Anpassung der Ausrichtung kann und muss dann noch um die Längsachse der Stableuchte 10 herum erfolgen, damit die Abstrahlöffnung am anderen Ende der Stableuchte genau horizontal ausgerichtet ist. Dazu kann beispielsweise eine Wasserwaage auf den Vierkant 103 aufgelegt und damit die richtige Ausrichtung gefunden werden. Sobald diese Ausrichtung gefunden ist, wird die Stableuchte 10 mittels der Rohrklemme 21 (siehe Fig. 5B) fixiert und ist somit in ihrer richtigen Einbau- und Betriebslage.

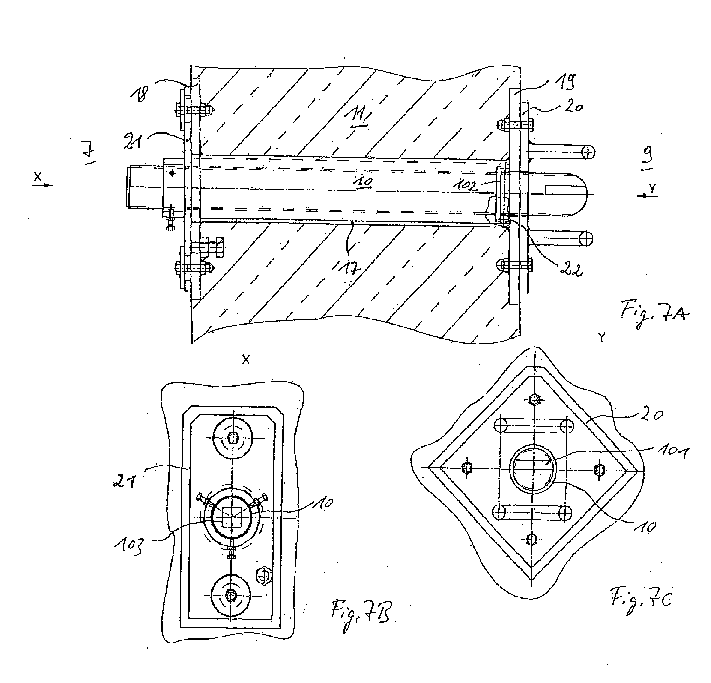

In eingebautem Zustand ist die Stableuchte in Fig. 7 gezeigt. Dort ist in dem in Fig. 7A gezeigten Querschnitt gut zu erkennen, wie die Stableuchte 10 in die Hülse 17 eingesetzt ist. Ferner ist auch eine Ringdichtung 22 erkennbar, die zwischen dem Anschlagring 102 und der äußeren Platte 19 angeordnet ist. Wird die Stableuchte 10 ausgebaut, dann wird stets beim Einbau derselben oder einer neuen Stableuchte 10 eine neue Dichtung 22 verwendet, so dass stets ein dichter Sitz der Stableuchte 10 in der Hülse 17 sichergestellt ist und Feuchtigkeit nicht auf diesem Wege in die Hülse 17 und damit in die Windenergieanlage eindringen kann. Die Figuren 7B und 7C zeigen jeweils Draufsichten auf die Stableuchte 10 in eingebautem Zustand von innen (Fig. 7B) bzw. von außen (Fig. 7C).

Zu den Dimensionierungen ist noch anzumerken, dass bevorzugt der Außendurchmesser des Anschlagrings 102 im wesentlichen dem Innendurchmesser der Hülse 17 entspricht.

Zu der Stableuchte 10 selbst ist noch anzumerken, dass drei Varianten denkbar sind. Bei der ersten Variante ist in der Stableuchte 10 selbst keinerlei Elektronik enthalten. Dadurch wird diese Stableuchte in ihrem Aufbau sehr einfach. Allerdings müssen die Zuleitungen entsprechend aufwendig vorgesehen sein, gerade wenn die Versorgung der einzelnen Leuchtmittel möglichst ausfallsicher und unabhängig voneinander erfolgen soll und sogar eine Rückleitung, z.B. für einen Fotowiderstand, vorgesehen werden soll, um eine Funktionskontrolle zu ermöglichen.

In einer weiteren Variante der Stableuchte ist Elektronik in der Stableuchte selbst vorgesehen. Hierbei lässt sich wiederum unterscheiden zwischen einer Ausführungsform, bei welcher die Elektronik die Leuchtmittel in Abhängigkeit von Triggersignalen ansteuert, die wiederum von einer zentralen Steuerung erzeugt werden, und zwischen einer Variante, bei die komplette Ansteuerung außerhalb der Stableuchte vorgesehen ist und die in der Stableuchte enthaltene Elektronik im wesentlichen Treiberfunktionen für die Leuchtmittel übernimmt.

Bei im wesentlichen allen Ausführungsformen der Stableuchte ergibt sich erfindungsgemäß das folgende Montageverfahren:
1. In einem ersten Schritt wird die Hülse 17 mit den daran befestigten Platten 18, 19 während der Herstellung der Betonfertigteile mit einbetoniert. Bei Stahltürmen ist dies natürlich nicht erforderlich. Dort reicht eine entsprechende Bohrung im Turm, in welche die Hülse 17 eingesetzt werden kann. Allerdings ist dabei zu beachten, dass der Stahlturm um die Bohrung herum ggf. verstärkt werden muss, um einen sicheren Lastabtrag zu gewährleisten, da der Stahlturm sonst durch die Bohrung bzw. die Bohrungen geschwächt werden würde.
2. Während der Errichtung des Turmes wird in einem zweiten Schritt der Rammschutz 20 angebracht.
3. Nach der Errichtung des Turms wird der Dichtungsring 22 auf den vorderen Teil der Stableuchte 10 am Anschlagring 102 aufgesetzt.
4. Die Leuchte 10 wird im nächsten Schritt in die Hülse 17 eingeschoben.
5. Danach wird die Rohrklemme 21 vom Turminneren 7 her aufgesetzt.
6. Die Leuchte 10 wird mittels einer Wasserwaage ausgerichtet und
7. die so gefundene Position der Stableuchte 10 mit der Rohrklemme 21 fixiert.
8. Sodann muss die Stableuchte noch angeschlossen werden und kann dann in Betrieb genommen werden.

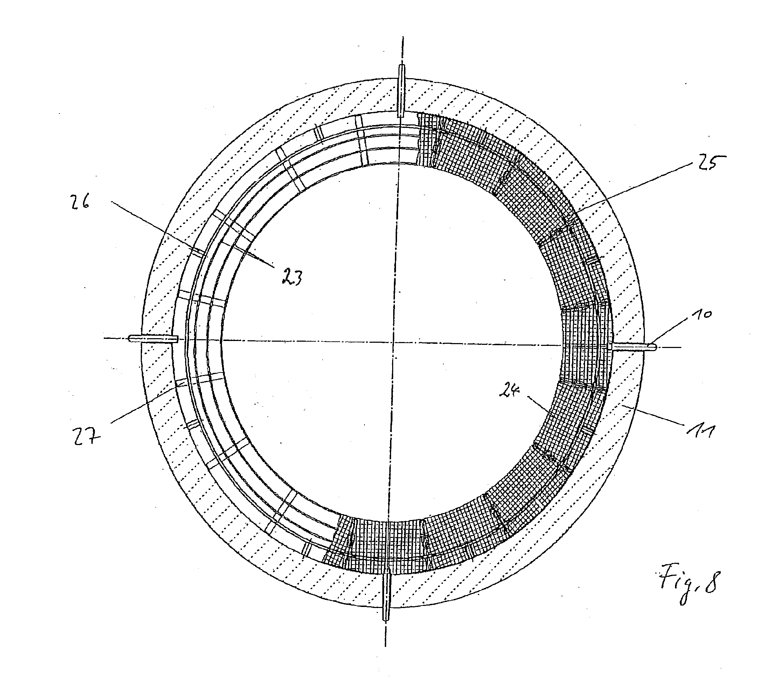

Um die erfindungsgemäße Stableuchte vom Turminneren aus erreichen zu können, was ja gerade durch die Erfindung erzielt werden soll, damit nicht mit großem Aufwand, wie z.B. einem Kran oder einer Hebebühne, von außen der Zugang erfolgen muss, sind in einer bevorzugten Ausgestaltung im Turminneren in einem vorgegebenen Abstand unterhalb der Stableuchte Laufringe 23 (siehe Fig. 8, linke Hälfte und 9A) bzw. Gitterroste 24 (siehe Fig. 8, rechte Hälfte und 9B) sowie ein zusätzlicher Sicherungsring 25 angebracht. Die Laufringe 23 sind über die in jeder Windenergieanlage vorhandenen Steigleitern erreichbar und sind so eingebaut, dass sich die Stableuchte 10 etwa in Brusthöhe des Technikers befindet, der auf den Laufringen 23 steht.

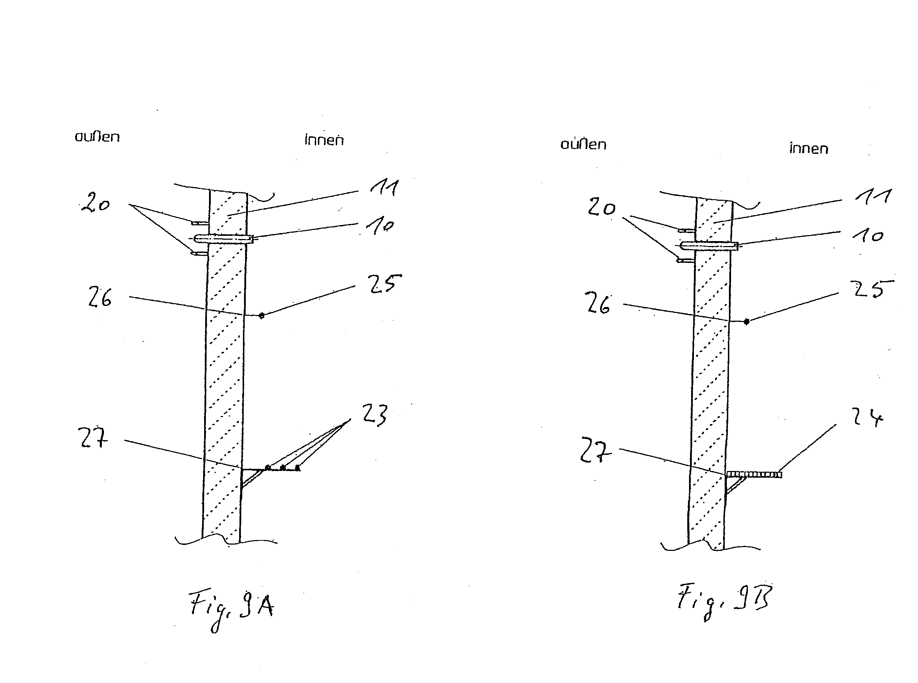

In Fig. 9A ist in einem Querschnitt eines Teils der Turmwand eine eingebaute Stableuchte 10 und der Rammschutz 20 erkennbar. Unterhalb der Stableuchte 10 ist zunächst ein Sicherungsring 25 vorgesehen, der am Innenumfang des Turms umläuft. Natürlich kann er z.B. im Bereich der Steigleiter unterbrochen sein. Dieser Sicherungsring ist unter Vermittlung erster (kurzer) Konsolen 26 an der Turmwand 11 befestigt. Unterhalb des Sicherungsrings 25 sind zweite Konsolen 27 vorgesehen, auf denen in der in Fig. 9A gezeigten Ausgestaltung Laufringe 23 befestigt sind. Diese Laufringe können wiederum innerhalb des Turmes umlaufen und sind so beabstandet, dass ein Techniker darauf sicher stehen kann. Die Anzahl (drei in der in Fig. 9A gezeigten Ausgestaltung) ist rein willkürlich gewährt. Natürlich können es auch vier, fünf oder mehr Laufringe sein.

In der in Fig. 9B gezeigten Ausgestaltung ist anstelle der Laufringe 23 ein Gitterrost 24 gezeigt. Dieses Gitterrost 24 kann segmentiert sein und anstelle der Laufringe 23 auf den zweiten Konsolen 27 als Lauffläche zum Erreichen der Stableuchte 10 vorgesehen sein.

In der in Fig. 8 gezeigten Draufsicht sind in der Turmwand 11 um jeweils 90° beabstandet Stableuchten 10 vorgesehen. Konzentrisch zur Turmwand ist der Sicherungsring 25 unter Vermittlung der ersten Konsolen 26 an der Turmwand 11 befestigt und läuft einmal innerhalb des Turms um. Die Steigleiter wurde hier aus Vereinfachungsgründen weggelassen.

Die Lauffläche, die mittels der zweiten Konsolen 27 an der Turmwand 11 befestigt ist, ist hier in der linken Hälfte des Turmes in Form von Laufringen 23 dargestellt, während in der rechten Hälfte Gitterrostsegmente 24 vorgesehen sind, die sich durch ihre Formgebung zu einem Kreis bzw. Kreisring ergänzen. Im Einzelfall können Laufringe oder Gitterroste vorgesehen sein, die dann entsprechend vollständig umlaufen.

## Patentansprüche

1. Stableuchte (10) zur Befeuerung eines Turmes (1), insbesondere einer Windenergieanlage, mit einem stabförmigen Halter, an dessen erstem Ende (10B) Leuchtmittel (14) und an dessen zweitem Ende (10A) Leuchtmittelanschlüsse (15) derart angeordnet und ausgestaltet sind, dass die Stableuchte (10) von innen durch eine Bohrung in der Turmwand (11) steckbar ist, so dass die Leuchtmittel (14) in die Umgebung (9) des Turmes abstrahlen.

2. Stableuchte (10) nach Anspruch 1,
**dadurch gekennzeichnet, dass** sich über den Leuchtmitteln (14) eine witterungsbeständige Schutzschicht (13) befindet, und vorzugsweise sich über der Schutzschicht (13) eine Schutzvorrichtung gegen mechanische Einflüsse befindet.

3. Stableuchte (10) nach einem der vorstehenden Ansprüche,
**dadurch gekennzeichnet, dass** die Leuchtmittel (14) in Reihe geschaltet sind.

4. Stableuchte (10) nach einem der vorstehenden Ansprüche,
**dadurch gekennzeichnet, dass** die Leuchtmittel (14) LEDs sind und vorzugsweise, die Leuchtmittel (14) in einer Linie angeordnet sind.

5. Stableuchte (10) nach einem der vorstehenden Ansprüche,
**dadurch gekennzeichnet, dass** die Stableuchte (10) Führungsmittel (16) aufweist zur horizontalen Ausrichtung der Stableuchte in der in der Turmwand (11) vorgesehene Bohrung.

6. Stableuchte (10) nach einem der vorstehenden Ansprüche,
**dadurch gekennzeichnet, dass** die Stableuchte (10) eine Signalvorrichtung zur Funktionsüberwachung der Leuchtmittel (14) aufweist.

7. Stableuchte (10) nach einem der vorstehenden Ansprüche,
**dadurch gekennzeichnet, dass** an dem zweiten Ende (10A) Mittel zur horizontalen Ausrichtung der Stableuchte, insbesondere ein Vorsprung (103) zum Auflegen von Ausrichtungsmitteln wie einer Wasserwaage, vorgesehen sind.

8. Stableuchte (10) nach einem der vorstehenden Ansprüche,
**dadurch gekennzeichnet, dass** im Bereich des ersten Endes (10B) ein Anschlagring (102) vorgesehen ist zur Definition der Einschubtiefe in die Bohrung in der Turmwand (11).

9. Windenergieanlage mit einem Turm (1),
**dadurch gekennzeichnet, dass** mindestens zwei Stableuchten (10) nach Anspruch 1 in einer Turmebene angebrachten Bohrungen zur Turmbefeuerung angeordnet sind.

10. Windenergieanlage nach Anspruch 9,
**dadurch gekennzeichnet, dass** in der Bohrung in der Turmwand (11) eine Hülse zur horizontalen Ausrichtung der Stableuchte (10) angeordnet ist und vorzugsweise die Bohrungen derart angebracht sind, dass die darin angeordneten Stableuchten (10) in einen Raumwinkel von 360° abstrahlen.

11. Windenergieanlage nach einem der Ansprüche 9 bis 10,
**dadurch gekennzeichnet, dass** an der Turminnenwand um die Bohrung eine Rohrklemme (21) vorgesehen ist mit Mitteln (213) zur horizontalen Ausrichtung und Fixierung der Stableuchte (10).

12. Windenergieanlage nach einem der Ansprüche 9 bis 11,
**dadurch gekennzeichnet, dass** an der Turmaußenwand um die Bohrung ein Rammschutz (20) vorgesehen ist mit Mitteln (202) zum Schutz des äußeren Endes (10B) der Stableuchte (10) vor mechanischen Beschädigungen.

13. Windenergieanlage nach einem der Ansprüche 9 bis 12,
**dadurch gekennzeichnet, dass** an der Turminnenwand Trittmittel, insbesondere Laufringe (23) oder Gitterroste (24) vorgesehen sind.

14. Turmelement, insbesondere einer Windenergieanlage,
**dadurch gekennzeichnet, dass** mindestens zwei Stableuchten (10) nach Anspruch 1 in einer Turmebene angebrachten Bohrungen zur Turmbefeuerung angeordnet sind.

15. Verfahren zur Anbringung einer Befeuerung eines Turmes, insbesondere einer Windenergieanlage,
**dadurch gekennzeichnet, dass** das erste Ende einer Stableuchte (10) nach Anspruch 1 von innen durch eine in der Turmwand (11) vorgesehene Bohrung in eine von außen sichtbare Position gebracht wird und dass die Leuchtmittelanschlüsse (15) des zweiten Endes der Stableuchte (10) mit im Inneren des Turmes (7) angeordneten Versorgungsleitungen verbunden werden, und vorzugsweise,
**gekennzeichnet durch** die weiteren folgenden Schritte:
- Einbringung einer Hülse in die Turmwand und Bildung einer Bohrung in der Turmwand,
- Anbringung eines Rammschutzes um die äußere Öffnung der Bohrung,
- Einschub der Stableuchte in die Hülse,
- Anbringung einer Rohrklemme im Turminneren um die Bohrung,
- horizontale Ausrichtung der Stableuchte und Fixierung der Position,
- Anschluss von Versorgungsleitungen an die Stableuchte vom Inneren des Turmes aus.
